(19)

**Europäisches Patentamt**
**European Patent Office**
**Office européen des brevets**

(11) **EP 4 317 062 A1**

(12) **EUROPEAN PATENT APPLICATION**

(43) Date of publication:
07.02.2024  Bulletin 2024/06

(21) Application number: 22020368.1

(22) Date of filing: 02.08.2022

(51) International Patent Classification (IPC):
$C01B\ 32/318^{(2017.01)}$    $B01J\ 21/18^{(2006.01)}$
$C01B\ 33/03^{(2006.01)}$    $C01B\ 33/033^{(2006.01)}$
$C01B\ 33/107^{(2006.01)}$

(52) Cooperative Patent Classification (CPC):
C01B 33/03; B01J 21/18; C01B 32/318;
C01B 33/033; C01B 33/1071; C01B 33/10773

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Lygin, Alexander**
**64347 Griesheim (DE)**

(72) Inventor: **Lygin, Alexander**
**64347 Griesheim (DE)**

(54) **OPTIMIZED PROCESS FOR SILICON DEPOSITION**

(57)     A process for converting trichlorosilane ($HSiCl_3$) to silicon (Si) and tetrachlorosilane ($SiCl_4$) comprising the following steps:

(a) Disproportionation of trichlorosilane in the presence of a catalyst to obtain a mixture (I) comprising monosilane ($SiH_4$), dichlorosilane ($H_2SiCl_2$), monochlorosilane ($H_3SiCl$) and tetrachlorosilane,

(b) Partial thermal decomposition of the mixture (I) obtained in step (a) at a temperature not exceeding 800°C to obtain silicon and a mixture (II) comprising unreacted tetrachlorosilane, wherein the molar ratio of the unreacted tetrachlorosilane to the obtained silicon is in the range 0.8:1 to 10:1.

(c) Optional feeding of the mixture (II) obtained in step (b) in step (a) followed by repeating steps (a) and (b).

EP 4 317 062 A1

**Description**

**Field of the invention**

The present invention relates to a process for low-temperature deposition of amorphous silicon nanoparticles using trichlorosilane as a feedstock.

**Background of the invention**

Elemental silicon (Si) is a principal constituent of semiconductors. Moreover, silicon anodes, due to their superior performance compared to graphite electrodes, gain importance for lithium-ion batteries. Silicon can be deposited in the form of thin layers or nanoparticles or larger agglomerates by thermal decomposition of silanes, such as monosilane ($SiH_4$) and chlorosilanes.

**Description of the prior art and the technical problem**

Reaction conditions required for silane decomposition vary strongly depending on the chemical structure of the silane. The so-called Siemens process, described e.g. in WO2008027101A1, allows commercial manufacturing of polycrystalline silicon starting from trichlorosilane ($HSiCl_3$) at the temperature of about 1100 °C in the presence of hydrogen under formation of a corrosive HCl by-product, simplified:

$$HSiCl_3 + H_2 \rightarrow Si + 3HCl$$

Highly corrosive by-products such as HCl require the use of expensive apparatuses made of non-corrosive materials and special techniques. If silane decomposition is carried out at high temperatures (e.g. > 900 °C), the obtained silicon particles typically have large size and are in crystalline form.

However, in many cases deposition of small amorphous nanoparticles at relatively low temperature is required.

Thus, EP2483956A1 assigned to Sila Nanotechnologies, discloses deposition of small silicon nanoparticles onto a carbon black based carbon support at 500 °C, 1 torr silane pressure for 1 hour followed by coating the silicon particles with carbon layer and agglomeration of the support to obtain silicon on carbon support composites, showing outstanding specific capacity in lithium-ion batteries.

Similarly, WO2022067030A1 assigned to Group 14 Technologies, discloses silicon deposition using monosilane feedstock onto a highly porous carbon support obtained by pyrolysis of a polymer material. $SiH_4$ decomposition carried out at about 500 °C leads to formation of very small amorphous Si nanoparticles located inside small pores, which is crucial for achieving high specific capacity of the resulting silicon anode in lithium cells and a high capacity retention thereof during charging/discharging.

WO2022029423A1 and WO2022029422A1 assigned to Nexeon disclose silicon deposition onto a porous carbon support at 430-500 °C in a fluidized bed reactor using 1-4 vol% monosilane diluted with nitrogen as a feedstock. This kind of material provides very high specific capacity used as silicon/carbon anode for lithium battery.

WO2022084545A1 assigned to Nexeon and Wacker Chemie describes silicon deposition on a porous carbon substrate using a silane precursor in a batch pressure reactor. The deposition described in the examples is typically carried out with monosilane at 420-450°C. Chlorosilanes such as trichlorosilane, dichlorosilane, monochlorosilane, tetrachlorosilane, higher chlorinated silanes as well as various methylchlorosilanes are also mentioned to be generally appropriate for silicon deposition. However, no specific reaction conditions for silicon deposition are disclosed.

As it can be seen from the prior art, realistically only monosilane ($SiH_4$) has been used so far for low temperature deposition of small amorphous silicon nanoparticles. Chemical vapour deposition (CVD) type processes typically used for silicon deposition, often require low temperature and partial pressure of silane.

Monosilane typically decomposes to amorphous Si and $H_2$ at 400-700 °C without forming any corrosive by-products:

$$SiH_4 \rightarrow Si + 2H_2$$

However, using monosilane for silicon deposition is associated with various disadvantages. In fact, low availability and high price of monosilane are currently among the most serious hurdles for rapid deployment of silicone anode technology.

$SiH_4$ is a highly flammable and pyrophoric gas with a very low boiling point of -112°C, which makes it very unsuitable for transport and only practically accessible at the point of its production. This forces silicon depositing companies such as those producing silicon anode materials for lithium batteries to plan and build their production facilities fence-to-fence to existing or new monosilane plants.

Due to its complex manufacturing process, monosilane is a quite expensive silicon source (calculated per kg silicon), as compared to trichlorosilane or tetrachlorosilane. Monosilane is commercially produced using a series of processes (1)-(2) disclosed in WO2013090726A1 assigned to REC silicon. Metallurgical grade silicon is first reacted with tetrachlorosilane and hydrogen to provide trichlorosilane (1). In a series of distillation separations and catalytic redistribution (disproportionation) processes, trichlorosilane is converted to tetrachlorosilane and monosilane (2). The thus obtained tetrachlorosilane is then recovered to step (1):

(1) $2H_2 + 3SiCl4 + Si \rightarrow 4HSiCl_3$

(2) $4HSiCl_3 \rightarrow SiH_4 + 3SiCl4$

Disproportionation of trichlorosilane, for the sake of simplicity presented in the form of an overall equation (2), is in fact a series of equilibrium processes involving, apart from trichlorosilane, tetrachlorosilane and monosilane also dichlorosilane ($H_2SiCl_2$) and monochlorosilane ($H_3SiCl$):

(2a) $2HSiCl_3 <-> H_2SiCl_2 + SiCl_4$

(2b) $H_2SiCl_2 + HSiCl_3 <-> H_3SiCl + SiCl_4$

(2c) $H_3SiCl + HSiCl_3 <-> SiH_4 + SiCl_4$

According to US4610858A1, equilibrium mixture obtained by disproportionation of trichlorosilane at 80 °C contain the following molar fractions of the silanes (Table 1):

**Table 1: Composition of trichlorosilane disproportionation mixture at 80 °C**

| Silane | $HSiCl_3$ | $H_2SiCl_2$ | $H_3SiCl$ | $SiH_4$ | $SiCl_4$ |
|---|---|---|---|---|---|
| Boiling point at 1 bar [°C] | 31.8 | 8.3 | -30 | -112 | 57.1 |
| Mol% | 77.1 | 10.6 | 0.52 | 0.04 | 11.8 |

Thus, monosilane (and optionally dichlorosilane and monochlorosilane) must be separated by distillation in extremely low concentrations from the equilibrium mixture, and the high-boiling residue must be returned to the disproportionation process to shift equilibrium (2) to the right and eventually obtain monosilane. To separate these low-boiling silanes from each other, a series of energy-consuming pressure distillations is required. This makes producing monosilane gas extremely complex and expensive.

Thus, the overall problem to be addressed by the present invention is that of providing a process for deposition of small amorphous silicon nanoparticles at relatively low temperature using readily available, inexpensive raw materials. Reaction conditions of such a deposition should preferably be compatible with currently used processes optimized for using monosilane.

**Solution**

Present invention suggests using trichlorosilane as a readily available silicon precursor for silicon deposition. Combining the catalytic disproportionation of trichlorosilane and thermal decomposition of the least thermodynamically stable components (Table 2) of the equilibrium mixture, such as monosilane and optionally dichlorosilane and monochlorosilane, while keeping tetrachlorosilane unreacted, allows shifting the equilibrium (2) to the right without the need for expensive distillative separation of monosilane.

This process, with specific embodiments described in detail below, helps to solve many problems described above.

**Table 2: Thermodynamic stability of silanes contained in trichlorosilane disproportionation mixture**

| Silane | $SiCl_4$ | $HSiCl_3$ | $H_2SiCl_2$ | $H_3SiCl$ | $SiH_4$ |
|---|---|---|---|---|---|
| $\Delta_f H^o{}_{gas}$ [kJ/mol] | -657 | -496 | -320 | -136 | 34 |

**The process**

The object of the present invention is a process for converting trichlorosilane ($HSiCl_3$) to silicon (Si) and tetrachlorosilane ($SiCl_4$) comprising the following steps:

(a) Disproportionation of trichlorosilane in the presence of a catalyst to obtain a mixture (I) comprising monosilane ($SiH_4$), dichlorosilane ($H_2SiCl_2$), monochlorosilane ($H_3SiCl$) and tetrachlorosilane,
(b) Partial thermal decomposition of the mixture (I) obtained in step (a) at a temperature not exceeding 800°C, preferably not exceeding 750°C, more preferably not exceeding 700°C, more preferably not exceeding 650°C, more preferably not exceeding 600°C, to obtain silicon and a mixture (II) comprising unreacted tetrachlorosilane, wherein the molar ratio of the unreacted tetrachlorosilane to the obtained silicon is in the range 0.8:1 to 10:1, preferably 0.9:1 to 8:1, more preferably 1:1 to 6:1, more preferably 1:1 to 4:1, more preferably 1:1 to 3:1,
(c) Optional feeding of the mixture (II) obtained in step (b) in step (a) followed by repeating steps (a) and (b).

Importantly, both tetrachlorosilane and silicon used for calculating the above defined molar ratio of unreacted tetrachlorosilane to obtained silicon, are derived from trichlorosilane employed in step (a) of the process. Thus, this ratio relates to the overall conversion of trichlorosilane to tetrachlorosilane and silicon in the inventive process.

The inventive process uses trichlorosilane as a feedstock for silicon deposition via a specially combined disproportionation and thermal decomposition process, while delivering a substantial amount of tetrachlorosilane (at least 0.5 mol $SiCl_4$ per mol deposited Si) as a by-product of the process. This relatively high amount of $SiCl_4$ is characteristic for thermal decomposition of monosilane, and optionally dichlorosilane and monochlorosilane, but not of tetrachlorosilane and trichlorosilane. The following table shows molar ratios of $SiCl_4$/Si originating from thermal decompositions of the less thermodynamically stable components of some simplified disproportionation mixtures comprising monosilane (1), monochlorosilane (2), dichlorosilane (3) and thermal decomposition of trichlorosilane according to Siemens process (4). Thus, a complete decomposition of monosilane, monochlorosilane and dichlorosilane, but no decomposition of trichlorosilane would result in a molar ratio of $SiCl_4$/Si of 1:1 to 3:1. Some thermal decomposition of trichlorosilane could decrease the ratio to below 1:1. On the other hand, not complete decomposition of monosilane, monochlorosilane and dichlorosilane could increase the ratio to more than 3:1. However, keeping the ratio at > 10:1 would be not economical.

**Table 3: Various disproportionation/thermal decomposition processes and corresponding molar ratios $SiCl_4$/Si**

|  | Process | Molar ratio $SiCl_4$/Si |
|---|---|---|
| (1) | $4HSiCl_3 \rightarrow SiH_4 + 3SiCl4 \rightarrow Si + 2H_2 + 3SiCl4$ | 3:1 |
| (2) | $3HSiCl_3 \rightarrow H_3SiCl + 2SiCl_4 \rightarrow Si + H_2 + HCl + 2SiCl_4$ | 2:1 |
| (3) | $2HSiCl_3 \rightarrow H_2SiCl_2 + SiCl_4 \rightarrow Si + 2HCl + SiCl_4$ | 1:1 |
| (4) | $HSiCl_3 + H_2 \rightarrow Si + 3HCl$ | 0 |

Process conditions in step (a) and/or in step (b) of the process should be carefully adjusted to result in the molar ratio $SiCl_4$/Si of 0.8:1 to 10:1. Thus, correct choosing temperature and/or duration of steps (a) and/or (b) may be of importance as well as the ratio of the amount of the disproportionation catalyst to the amount of trichlorosilane per time unit. However, the optimal temperature, duration and the amount of catalyst depend on each other so that only a parameter of the resulting molar ratio of $SiCl_4$/Si may adequately characterize the whole set of appropriate for the inventive process conditions, wherein the disproportionation mixture (I) is thermally decomposed in such a way that substantially no direct decomposition of trichlorosilane takes place.

The obtained in the inventive process by-product $SiCl_4$ is not a waste. It may be readily converted to trichlorosilane feedstock or utilized in another fashion, as described below. On the other side, this process provides the first practical way of using an inexpensive, readily available and transportable trichlorosilane as a convenient precursor for low temperature silicon deposition.

Some prior documents, such as EP1882675A1 and EP0334664A2 disclose thermal decomposition of the mixtures comprising trichlorosilane and hydrogen according to the Siemens process in combination with disproportionation of the resulting chlorosilane product mixture containing monosilane, monochlorosilane and dichlorosilane to obtain more trichlorosilane feedstock for deposition. The inventive process is quite different from this prior art and pursues quite opposite purpose of achieving silicon deposition not via thermal decomposition of trichlorosilane, but of other silanes.

Importantly, the decomposition temperature in step (b) of the inventive process can be selected so low, that typically no meaningful thermal decomposition of trichlorosilane or tetrachlorosilane is possible under reaction conditions. Thus, in step (b) of the inventive process, preferably maximally 20%, more preferably maximally 10%, more preferably maximally 5%, more preferably maximally 2%, more preferably less than 1% of trichlorosilane present in mixture (I) is thermally decomposed to obtain silicon. Similarly, in step (b) of the inventive process, preferably maximally 10%, more preferably maximally 5%, more preferably maximally 3%, more preferably maximally 2%, more preferably less than 1% of tetrachlorosilane present in mixture (I) is thermally decomposed to obtain silicon.

The temperature and the duration of step (a) of the inventive process depend on the amount and the nature of the employed catalyst as well as concentrations of silanes in the mixture fed into step (a). In general, duration of step (a) may be from 1 s to 24h, more preferably from 10 s to 10h, more preferably from 1 minute to 3 h. The typical temperature may be between 30°C and 800 °C. In the embodiments, where steps (a) and (b) are carried out in two separate reactors, the usual temperature in step (a) may be from 30 °C to 250 °C, more preferably from 40 °C to 200 °C, more preferably from 50 °C to 150 °C. In the embodiments, where steps (a) and (b) are carried out in the same reactor, the usual temperature in step (a) is equal to the usual temperature in step (b).

The duration of step (b) of the inventive process depends in the first place on the requirements for the rate of silicon deposition as well as the temperature in step (b). In general, duration of step (b) may be from 1 s to 24h, more preferably from 1 minute to 10h, more preferably from 30 minutes to 5 h.

**Silicon**

As a direct consequence of a relatively low decomposition temperature in step (b) of the inventive process, the silicon obtained in step (b) is preferably predominantly in amorphous form. "Predominantly" means in the context of the present invention that at least 50%, more preferably 60%, more preferably 70%, more preferably 80%, more preferably 90%, more preferably 95%, more preferably 99% of the deposited silicon is in the amorphous form. In crystalline silicone, the Si atoms form well-ordered crystal lattice. Contrary, in amorphous silicon, this type of order is not present. Rather, the atoms form a continuous random network. Methods for quantification of crystallinity/amorphity of silicon, such as by XRD techniques, are well known from the prior art.

In the present invention, silicon is preferably deposited in form of nanoparticles. Such silicon particles preferably have a number average particle size $d_{50}$ of smaller than 200 nm, more preferably 1 nm to 200 nm, more preferably 2 nm to 100 nm, more preferably 3 nm to 50 nm, more preferably 5 nm to 40 nm. The number average particle size $d_{50}$ can be measured by transmission electronic microscopy (TEM) analysis. This number average particle size $d_{50}$ can be determined by calculating the average size of at least 500 particles analysed by TEM.

**Silane mixtures**

Trichlorosilane converted in step (a) of the inventive process may be provided in a pure form, or preferably in form of a mixture with other components, termed as "mixture fed in step (a)" further.

Mixture fed in step (a) of the inventive process, mixture (I) and/or mixture (II) may contain various silanes as well as other gases, such as inert gases, for example nitrogen or argon, hydrogen, HCl, $Cl_2$, $CO_2$, oxygen, air. Mixture fed in step (a) of the inventive process, mixture (I) and/or mixture (II) preferably contain at least 10 vol%, more preferably at least 30 vol%, more preferably at least 70 vol%, more preferably at least 50 vol%, more preferably at least 90 vol%, more preferably at least 95 vol% of silanes, more preferably at least 99 vol% of silanes.

Hydrogen may be added to mixture (I) prior to or during carrying out step (b) of the process. In this way, thermal decomposition of silanes, particularly chlorosilanes, present in the mixture (I) may be facilitated.

Molar ratio X (in mol%) of each selected silane S in the total sum of all silanes present in the mixture may be calculated according to the following equation:

$$X \text{ (in mol\%)} = 100 \times \text{(amount of silane S [in mol])} / \text{(sum of amounts of all silanes in the mixture [in mol])}.$$

Mixture fed in step (a) of the inventive process may have the following molar ratios of selected silanes to the total sum of all silanes present in the mixture: 20-100 mol%, more preferably 40-100 mol%, more preferably 60-100 mol% trichlorosilane, 0-30 mol%, more preferably 0-25 mol%, more preferably 0-20 mol% dichlorosilane, 0-25 mol%, more preferably 0-15 mol%, more preferably 0-10 mol% monochlorosilane, 0-20 mol%, more preferably 0-10 mol%, more preferably 0-5 mol% monosilane, 0-50 mol%, more preferably 0-40 mol%, more preferably 0-30 mol% tetrachlorosilane.

Mixture (I) may have the following molar ratios of selected silanes to the total sum of all silanes present in the mixture: 20-99.9 mol%, more preferably 40-95 mol%, more preferably 60-90 mol% trichlorosilane, 0.1-30 mol%, more preferably 1-25 mol%, more preferably 2-20 mol% dichlorosilane, 0.005-25 mol%, more preferably 0.01-15 mol%, more preferably 0.1-10 mol% monochlorosilane, 0.001-20 mol%, more preferably 0.01-10 mol%, more preferably 0.02-5 mol% monosilane, 0.1-50 mol%, more preferably 1-40 mol%, more preferably 5-30 mol% tetrachlorosilane.

Mixture (II) may have the following molar ratios of selected silanes to the total sum of all silanes present in the mixture: 20-99.9 mol%, more preferably 40-99 mol%, more preferably 60-95 mol% trichlorosilane, 0-30 mol%, more preferably 0-20 mol%, more preferably 0-10 mol% dichlorosilane, 0-20 mol%, more preferably 0-15 mol%, more preferably 0-10 mol% monochlorosilane, 0-15 mol%, more preferably 0-10 mol%, more preferably 0-5 mol% monosilane, 0.1-50 mol%, more preferably 1-40 mol%, more preferably 5-30 mol% tetrachlorosilane.

Mixture (II) may be or may not be identical with the mixture fed in step (a) of the inventive process. Apparently, at the beginning of the inventive process, no mixture (II) is yet produced to be possibly recycled in step (a), so mixture fed in step (a) of the inventive process is not recycled mixture (II). Mixture (II) can be mixed with other gases, e.g. those comprising silanes or not prior to feeding to step (a) of the inventive process or during this step.

**Disproportionation catalyst**

Step (a) of the inventive process is a catalytic disproportionation of trichlorosilane. Catalysts for this transformation are generally known from the prior art.

The catalyst used in step (a) of the inventive process is preferably selected from the group consisting of carbonaceous material, e.g. activated carbon, particularly in the form of the porous carbonaceous support material described in detail below; nitrogen-containing materials such as tertiary amines, preferably having linear, branched or cyclic aliphatic hydrocarbon groups with 1 to 20 carbon atoms (specific examples of such tertiary aliphatic amines are tri-butylamine, tri-pentylamine, tri-hexylamine, tri-heptylamine, tri-octylamine, tri-decylamine, tri-dodecylamine); quaternary ammonium salts of such tertiary amines, e.g. halides; nitriles; imines; N-heterocycles, e.g. 1-methylimidazole, 1-trimethylsilylimidazole, benzothiazole; amides, e.g. N-methyl-2-pyrrolidone, N,N-dimethylformamide, N,N-dimethylacetamide, N,N-dimethylbutylamide; dialkylcyanamides; substituted ureas and guanidine derivatives, e.g. tetramethylurea, tetramethyl-guanidine; phosphorous-containing materials such as quaternary phosphonium salts, e.g. halides or phosphoramides.

The disproportionation catalyst for step (a) of the process may be in gas, liquid or solid state. In some preferred embodiments, the appropriate catalysts may be in vapour (gas) form. In other preferred embodiments, the catalyst is in solid form. As such, it may be supported on a solid substrate such as organic resins, e.g polymeric styrenedivinylbenzene matrix, silica, activated carbon or suchlike.

**Support for silicon deposition**

Silicon particles may be obtained in step (b) of the process "in bulk", i.e. directly solidified from the gas mixture, without using any support. However, preferably, in step (b) of the inventive process, silicon is deposited on a support material such as a metal, e.g. copper, silver, gold, nickel in any suitable form such as foil, rod etc, a metal oxide such as silica, alumina, polymer, a porous carbonaceous material, or a mixture thereof.

In particularly preferred embodiments, the support material comprises an electrically conductive material or a material, which can be made conductive by thermal treatment.

In some preferred embodiments, the support material comprises a mechanically resilient polymer, i.e. a polymer having the ability to expand and contract with minimal mechanical failure, such as polyacrylonitrile (PAN). This may help to accommodate expansions and contractions of silicon particles during charging/re-charging cycles, e.g. if they are used in an active anode material for lithium ion batteries. Preferably, the support polymer can be self-cyclized by thermal treatment. In some preferred embodiments, the polymer support comprises cyclized polyacrylonitrile (cPAN).

Particularly preferably, a porous carbonaceous material, preferably activated, is used as a support material. The porous carbonaceous material may be activated carbon, carbon nanotubes, e.g. single- (SWCNTs), double- (DWCNTs) or multi-walled carbon nanotubes (MWCNTs) (with or without surface coatings); graphene, various types of carbon black (including those that are annealed at above 1000 °C in inert environment); various types of carbon fibers (including those that are annealed at above 1000 °C in an inert environment); various types of carbon-coated ceramic nanowires or fibers (e.g., $Al_2O_3$ nanowires or fibers); various types of carbon onions; various types of graphite, e.g. graphite flakes. The surface chemistry of each type of such additive may be individually optimized for optimum performance in cells.

The porous carbonaceous support material may also be obtained by pyrolysis of an organic polymer. Such polymers may be fabricated by chemical synthesis or precipitation driven fabrication or combination of the chemical and precipitation methods. Their pyrolysis (thermal treatment) and activation (partial oxidation to introduce or increase the volume of interconnected pores) may provide suitable porous carbonaceous materials. Desired pore sizes and their distribution may be achieved, for example, by a combination of porosity in the polymer precursor and a carbon activation process. Another way to produce such porous carbonaceous supports includes synthesis of a large polymer monolith, its carbonization (pyrolysis), and mechanical grinding of the carbon monolith into particles of the desired shape. The activation process may involve physical oxidation with oxygen-containing gases (such as $CO_2$, $H_2O$, air, $O_2$, etc.), chemical activation (e.g., with KOH) or a combination of these approaches. The activation may be performed during or after the thermal treatment. In order to introduce both micropores and mesopores (which may in some cases be beneficial), carbon activation may be performed at different temperatures (e.g., at about 800 and about 1000° C.) or using different activation agents (e.g., $CO_2$ and $H_2O$). In some cases, it may be beneficial to introduce mesopores into the porous carbon by utilizing a mixture of two polymers (or carbon yielding polymer mixture with organic liquid) within the polymeric precursor particles. In some cases, the organic liquid can be a non-solvent for the polymer or the polymer can be swollen in that liquid. The non-solvent/solvent nature of the liquid will define the pore sizes and distribution of the pores. One of the polymers can be either removed after synthesis of the polymeric particles by selective extraction or one of the polymers may inherently exhibit low thermal stability or very low carbon yield during carbonization or after activation, or both. In some cases, pores may be introduced into the surface of dense carbon particles (such as synthetic or artificial graphite, mesocarbon microbeads, etc.). In one example, metal or other inorganic nanoparticles may be pre-deposited on the surface of carbon to serve as catalysts for etching or oxidation of pores within the carbon. In another example, extractable, non-carbonizing nanoparticles may be introduced into the polymer particles subjected to carbonizations. In other examples, a porous carbonaceous support may be made by carbon deposition (CVD for example) on a highly porous scaffold made from inorganic material, such as silica aerogel.

Additional important benefit of using an activated carbonaceous support material for silicon deposition in step (b) of the inventive process is that this support material itself may act as a catalyst for disproportionation of trichlorosilane in step (a) of the process.

BET surface area of the porous carbonaceous material or cPAN material is preferably at least 5 $m^2/g$, more preferably 10 $m^2/g$ - 2500 $m^2/g$, more preferably of 30 $m^2/g$ - 2000 $m^2/g$ and most preferably of 50 $m^2/g$ -1800 $m^2/g$. The BET surface area can be determined according to DIN 9277:2014 by nitrogen adsorption according to Brunauer-Emmett-Teller procedure.

The support material can be pre-heated to a temperature of at least the reaction temperature, more preferably to a temperature at least 10°C higher than the reaction temperature, more preferably to a temperature at least 30°C higher than the reaction temperature in step (b), prior to contacting with the mixture (I). In this way, silicon deposition on the support's surface and/or in its pores may be favored versus silicon deposition elsewhere, e.g. on the reactor walls or in the bulk.

If the used support is thermally treated in any preceding to deposition process step, e.g. for activation, purification, pore formation or any other purpose, the above-described preheating operation can be omitted and substituted by the appropriate cooling of the support material to the temperature required for deposition. In this way, the overall process may be more efficient, as less energy is consumed for pre-conditioning of the support.

**Silicon-support composite**

Silicon-support composite obtained by the deposition of silicon onto a support material in step (b) of the inventive process preferably comprises 1% to 90%, more preferably 5% to 60%, more preferably 10% to 50% by weight of silicon.

Silicon-support composite prepared by the process preferably has a spherical or substantially spherical shape.

Silicon-support composite prepared by the inventive process preferably has a number average particle size $d_{50}$ of smaller than 500 $\mu m$, more preferably 0.5 $\mu m$ to 200 $\mu m$, more preferably 1 $\mu m$ to 100 $\mu m$, more preferably 5 $\mu m$ to 50 $\mu m$. The number average particle size can be determined according to ISO 13320:2009 by laser diffraction particle size analysis.

**Further silicon treatment**

Silicon obtained in step (b) of the process may be further coated with a passivating layer, e.g. comprising carbon and/or silica. For obtaining such a carbon coating, silicon may be heated to at least 500 °C, preferably at least 650 °C in the presence of at least one hydrocarbon such as linear, branched and/or cyclic alkanes, alkenes, alkines and/or aromatics. In general, such hydrocarbons may comprise 1 to 100 carbon atoms, preferably 1 to 20 carbon atoms. Specific examples include ethane, ethene, propane, propene, cyclopropane, butene, acetylene, benzene. For obtaining a silica passivating coating, the deposited silicon may be subjected to contacting and reacting with oxygen, air or oxygen-containing compounds such as ethanol, $CO_2$ etc.

Due to using chlorosilanes, silicon obtained in step (b) may contain trace amounts of chlorine and may be purified thereof, e.g. by washing with an appropriate liquid solvent such as water or alcohol, vacuum treatment at a pressure of less than 1 bar, preferably less than 300 mbar, more preferably less than 50 mbar, thermal treatment at a temperature of > 800 °C, more preferably at least 1000 °C and/or hydrogenation.

**Further conversion of mixture (II)**

Mixture (II) obtained after silicon deposition in step (b) and comprising tetrachlorosilane is a valuable by-product of the inventive process, which, for example, may be converted to fumed silica. Fumed silicas are prepared by means of flame hydrolysis or flame oxidation. This involves oxidizing or hydrolysing of hydrolysable or oxidizable starting materials, generally in a hydrogen/oxygen flame. The hydrophilic silica thus obtained is amorphous. Fumed silicas are generally in aggregated form. "Aggregated" is understood to mean that what are called primary particles, which are formed at first in the genesis, become firmly bonded to one another later in the reaction to form a three-dimensional network. The primary particles are substantially free of pores and have free hydroxyl groups on their surface. Such hydrophilic silicas can, as required, be hydrophobized, for example by treatment with reactive silanes.

Mixture (II) may also be hydrogenated, catalytically or uncatalyzed, to at least partially convert tetrachlorosilane to trichlorosilane. An example of such hydrogenation is described in DE102009003085A1. The thus obtained trichlorosilane, purified or as a mixture with other components, may again be fed into step (a) of the process or used elsewhere.

Alternatively, mixture (II), optionally mixed with hydrogen, may also be reacted with silicon, e.g. of metallurgical grade to convert tetrachlorosilane to trichlorosilane. This trichlorosilane, purified or as a mixture with other components, may again be fed into step (a) of the process.

**Reactor**

Step (b) of the inventive process may be carried out in any suitable reactor type, such as a tubular reactor, a rotary kiln or a fluidized bed reactor. Tubular reactor, which may be positioned horizontally, vertically or be inclined by an angle between 0 and 90 °C with respect to the earth's surface, is one of the most preferred reactor types. Tubular reactor type may be set in motion, e.g. via vibration during carrying out step (b) of the inventive process.

Steps (a) and (b) of the process according to the invention may be carried out in two separate reactors. In this case, step (a) is preferably carried out in the first reactor by passing a gas mixture comprising trichlorosilane through a solid disproportionation catalyst. Mixture (I) obtained in the first reactor after disproportionation of trichlorosilane is fed into step (b) of the process carried out in the second reactor, while the disproportionation catalyst remains in the first reactor. Thermal decomposition of mixture (I) provides silicon and mixture (II) comprising trichlorosilane, which may be fed into step (a) of the process. Steps (a)-(b) can then be repeated for multiple times.

In an alternative embodiment, steps (a) and (b) of the inventive process may be carried out simultaneously in the same reactor. In this case, a disproportionation catalyst, preferably present in solid or gas form in the reactor, is contacted with the mixture comprising trichlorosilane leading to obtaining mixture (I). This mixture (I), without leaving the reactor, undergoes partial thermal decomposition to obtain silicon and mixture (II). This mixture (II), again without leaving the reactor, is fed into step (a) of the process. Steps (a)-(b) can be repeated for multiple times. If steps (a)-(b) are carried out in the same reactor, no physical separation of these process steps is possible. However, both steps (a) and (b) interchangeably take place in situ in the reactor.

In the inventive process, steps (a)-(c) are preferably carried out for at least 5 times, more preferably for at least 10 times, more preferably for at least 20 times.

**Use of silicon and silicon-support composite**

Another object of the present invention is silicon and/or silicon-support composite obtainable by the inventive process.

This silicon and/or silicon-support composite can be used as a semiconductor material or preferably as a constituent of a negative electrode (anode) for a lithium-ion battery.

**Particularly preferred embodiments**

Two specific preferred embodiments of the invention are exemplarily described below. These embodiments are by no means limiting for the invention as a whole and are just intended to give a general idea of a possible specific using of the invention.

In both embodiments, silicon deposition is carried out onto porous carbonaceous support materials. Two specific types of materials (I) and (II) are selected as particularly suitable for silicon deposition.

**Embodiment 1 (Steps (a) and (b) are carried out in the same reactor)**

The first porous carbonaceous material is obtained by pyrolysis of a polymer, such as Bisphenol A / hexamethylenetetramine-based polymer at 650-1100 °C followed by activation at 650-1100°C under $CO_2$ or water atmosphere

to obtain highly porous activated carbonaceous material with a BET of about 1700 m$^2$/g, as generally described in WO2022067030A1, JP2020097755A, WO2022035879A1, WO2022072715A1. This activated carbon serves as a disproportionation catalyst in the inventive process.

The first porous carbonaceous material is placed in a horizontal tubular reactor and pre-heated to a temperature of 550 °C under the atmosphere of nitrogen. Nitrogen is then replaced with trichlorosilane gas. The reaction mixture is kept at 550 °C for 5 h, then cooled down to ambient temperature. Silicon is deposited onto the carbonaceous porous support, while tetrachlorosilane is formed as a by-product of the process. Reaction temperature, time, and the amounts of carbon support and trichlorosilane are chosen so that Si content in the product is between 10 wt% and 50 wt%, and SiCl$_4$/Si molar ratio is between 1:1 and 1:3.

**Embodiment 2 (Steps (a) and (b) are carried out in two different reactors)**

The second porous carbonaceous material is obtained by graphitization of a carbon black powder at 2000 °C for 1 h to obtain a porous carbonaceous material with a BET of about 80 m2/g, as generally described in WO2011041468A1.

The inventive process is carried out in two separate reactors:

The first tubular reactor is a fixed bed reactor packed with a dimethylamino-functional ion exchange resin on a styrene divinylbenzene basis (Amberlyst A-21) kept at about 60 °C.

The second reactor is a horizontal tubular reactor.

The second porous carbonaceous material is placed in a horizontal tubular reactor and pre-heated to a temperature of 550 °C under the atmosphere of nitrogen.

Trichlorosilane gas is fed into the first reactor and passed through the catalyst bed. The reaction mixture from the first reactor is fed to the second reactor and then cooled down and circulated back to the first reactor so, that the temperature of the first reactor is kept at about 60 °C, and the temperature of the second reactor is kept at about 550 °C. The circulating of the reaction mixture is continued for 5 h, then the reactors are cooled down to ambient temperature. Silicon is deposited onto the carbonaceous porous support, while tetrachlorosilane is formed as a by-product. Reaction temperature, time, and the amounts of carbon support and trichlorosilane are chosen so that Si content in the product is between 10 wt% and 50 wt%, and SiCl$_4$/Si molar ratio is between 1:1 and 1:3.

**Claims**

1. A process for converting trichlorosilane (HSiCl$_3$) to silicon (Si) and tetrachlorosilane (SiCl$_4$) comprising the following steps:

   (a) Disproportionation of trichlorosilane in the presence of a catalyst to obtain a mixture (I) comprising monosilane (SiH$_4$), dichlorosilane (H$_2$SiCl$_2$), monochlorosilane (H$_3$SiCl) and tetrachlorosilane,
   (b) Partial thermal decomposition of the mixture (I) obtained in step (a) at a temperature not exceeding 800°C to obtain silicon and a mixture (II) comprising unreacted tetrachlorosilane, wherein the molar ratio of the unreacted tetrachlorosilane to the obtained silicon is in the range 0.8:1 to 10:1.
   (c) Optional feeding of the mixture (II) obtained in step (b) in step (a) followed by repeating steps (a) and (b).

2. The process according to claim 1, wherein silicon obtained in step (b) is predominantly in amorphous form.

3. The process according to any preceding claim, wherein steps (a)-(c) are carried out for at least 5 times.

4. The process according to any preceding claim, wherein the catalyst used in step
   (a) is selected from the group consisting of carbonaceous materials, such as activated carbon; nitrogen-containing materials such as tertiary trialkylamines, tertiary ammonium salts, imines, nitrogen heterocyles, nitriles, tertiary amides and cyanamides, substituted ureas and guanidines, ion-exchange resins containing tertiary amino groups; phosphorus-containing compounds such as quaternary phosphonium salts or phosphoramides, and the mixtures thereof.

5. The process according to any preceding claim, wherein in step (b) silicon is deposited on a support material selected from the group consisting of metals, metal oxides, polymers, porous carbonaceous materials, and mixtures thereof.

6. The process according to claim 5, wherein the support material is selected from the group consisting of activated carbon, carbon nanotubes, graphene, carbon black, carbon fibers, carbon-coated ceramic nanowires or fibers, graphites, pyrolyzed polymer materials, polyacrylonitrile, cyclized polyacrylonitrile, and mixtures thereof.

7. The process according to claims 5-6, wherein the support material is pre-heated to a temperature of at least the reaction temperature in step (b) prior to contacting with the mixture (I).

8. The process according to any preceding claim, wherein the silicon obtained in step (b) is further coated with a passivating layer comprising carbon and/or silica.

9. The process according to any preceding claim, wherein hydrogen is added to mixture (I) prior to or during carrying out step (b).

10. The process according to any preceding claim, wherein the silicon obtained in step (b) is further purified from chlorine by washing with a liquid solvent, vacuum treatment at a pressure of less than 1 bar, thermal treatment at a temperature of > 800 °C and/or hydrogenation.

11. The process according to any preceding claim, further comprising hydrogenating of a mixture (II) to at least partially convert tetrachlorosilane to trichlorosilane prior to feeding the thus obtained trichlorosilane to step (a).

12. The process according to any preceding claim, further comprising converting the mixture (II) to fumed silica.

13. The process according to any preceding claim, wherein the reactor for carrying out step (b) is a tubular reactor, a rotary kiln or a fluidized bed reactor.

14. The process according to any preceding claim, wherein steps (a) and (b) are carried out in two separated reactors.

15. The process according to any preceding claim, wherein steps (a) and (b) are carried out simultaneously in the same reactor.

Europäisches
Patentamt

European
Patent Office

Office européen
des brevets

# EUROPEAN SEARCH REPORT

Application Number

EP 22 02 0368

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WO 2022/067030 A1 (GROUP14 TECH INC [US]) 31 March 2022 (2022-03-31) | 1-13,15 | INV. C01B32/318 |
| A | * embodiments 1-11; page 22, lines 2-33; examples 5,7 * * the whole document * | 14 | B01J21/18 C01B33/03 C01B33/033 C01B33/107 |
| X | US 4 613 489 A (MORIMOTO SHIRO [JP]) 23 September 1986 (1986-09-23) | 1,2,4,9, 13,14 | |
| A | * example 1; table 3 * * the whole document * | 3,5-8, 10-12,15 | |
| X | EP 0 921 098 A1 (MEMC ELECTRONIC MATERIALS [US]) 9 June 1999 (1999-06-09) * paragraphs [0002], [0003], [0007], [0010]; claims 1-5 * * the whole document * | 1-15 | |

TECHNICAL FIELDS
SEARCHED      (IPC)

C01B
B01J

The present search report has been drawn up for all claims

| Place of search | Date of completion of the search | Examiner |
|---|---|---|
| The Hague | 20 January 2023 | Follens, Lana |

EPO FORM 1503 03.82 (P04C01)

EP 4 317 062 A1

## ANNEX TO THE EUROPEAN SEARCH REPORT
## ON EUROPEAN PATENT APPLICATION NO.

EP 22 02 0368

This annex lists the patent family members relating to the patent documents cited in the above-mentioned European search report.
The members are as contained in the European Patent Office EDP file on
The European Patent Office is in no way liable for these particulars which are merely given for the purpose of information.

20-01-2023

| Patent document cited in search report | | Publication date | Patent family member(s) | | Publication date |
|---|---|---|---|---|---|
| WO 2022067030 | A1 | 31-03-2022 | NONE | | |
| US 4613489 | A | 23-09-1986 | DE | 3412705 A1 | 21-02-1985 |
| | | | IT | 1180177 B | 23-09-1987 |
| | | | JP | S6042216 A | 06-03-1985 |
| | | | JP | S6319442 B2 | 22-04-1988 |
| | | | US | 4613489 A | 23-09-1986 |
| EP 0921098 | A1 | 09-06-1999 | EP | 0921098 A1 | 09-06-1999 |
| | | | KR | 19990045131 A | 25-06-1999 |
| | | | US | 5910295 A | 08-06-1999 |

EPO FORM P0459

For more details about this annex : see Official Journal of the European Patent Office, No. 12/82

**REFERENCES CITED IN THE DESCRIPTION**

**Patent documents cited in the description**

- WO 2008027101 A1
- EP 2483956 A1
- WO 2022067030 A1
- WO 2022029423 A1
- WO 2022029422 A1
- WO 2022084545 A1
- WO 2013090726 A1
- US 4610858 A1

- EP 1882675 A1
- EP 0334664 A2
- DE 102009003085 A1
- JP 2020097755 A
- WO 2022035879 A1
- WO 2022072715 A1
- WO 2011041468 A1